# EUROPEAN PATENT APPLICATION

(11) **EP 2 264 665 A1**
(43) Date of publication of application: **22.12.2010**
(21) Application number: 10006278.5
(22) Date of filing: 16.06.2010
(51) Int. Cl.: G06Q 30/00

(54) **Placing information in user-generated content**

(30) Priority: 16.06.2009 US 187547 P; 28.08.2009 US 549669
(71) Applicant: ACCENTURE Global Services GmbH, 8200 Schaffhausen (CH)
(72) Inventor: Kirkby, Stephen Denis, Unley Park, SA 5061 (AU)
(74) Representative: Müller-Boré & Partner Patentanwälte

(57) **Abstract**

Product-related information provided by brand owners is made available for inclusion in user-generated content. Users may include the product-related information in user-generated content, and receive payment for including the product-related information in their user-generated content based on metrics and rules for publishing the product-related information.

## Description

### PRIORITY

This application claims priority to U.S. provisional patent application serial number 61/187,547, filed June 16, 2009, and entitled "Product Placement for the Masses", and U.S. patent application serial number 12/549,669, filed August 28, 2009, and entitled "Product Placement for the Masses", both of which are incorporated by reference in their entireties.

### BACKGROUND

Given the ubiquitous nature of the Internet, the Internet has become a common vehicle for purveyors of goods and services to reach new customers and generate new business. In particular, online advertising is a highly-popular, Internet-based tool used by businesses to achieve their objectives, such as to increase market share and revenue.

Online advertising typically includes posting advertisements (ads) on web sites. The ads may include a marketing message, and a user may be able to click on the ad, which typically takes the user to another web page for a product or service being marketed in the ad. Ads may be provided in many forms, such as text ads, image ads, banner ads, etc.

The trend on the Internet is moving towards the publishing of user-generated content (UGC) on the Internet rather than the publishing of content by paid professionals. UGC is content produced by the general public rather than by paid professionals. UGC is mostly available on the Web via blogs, wikis, social media pages, product reviews, and articles. UGC is published on the web in some context, and thus differs from email or instant messages, which are not published and instead are sent to specific addresses.

Other than simply posting ads on social media web pages, online advertising generally has not reached UGC. Furthermore, the traditional pay-perclick revenue models for online advertising are paying less these days, and advertisers and users generating UGC have not fully realized the potential of advertising in UGC.

### BRIEF DESCRIPTION OF DRAWINGS

The embodiments of the invention will be described in detail in the following description with reference to the following figures.

Figure 1 illustrates a system, according to an embodiment;

Figure 2 illustrates a more detailed diagram of the system, according to an embodiment;

Figures 3A-D illustrate examples of displays that may be provided by the system, according to an embodiment;

Figure 4 illustrates a method for ranking UGCs and determining payment amounts, according to an embodiment;

Figure 5 illustrates a method of storing PRIs and rules, according to an embodiment; and

Figure 6 illustrates a computer system that may be used for the methods and systems, according to an embodiment.

### DETAILED DESCRIPTION OF EMBODIMENTS

For simplicity and illustrative purposes, the principles of the embodiments are described by referring mainly to examples thereof. In the following description, numerous specific details are set forth in order to provide a thorough understanding of the embodiments. It will be apparent however, to one of ordinary skill in the art, that the embodiments may be practiced without limitation to these specific details. In some instances, well known methods and structures have not been described in detail so as not to unnecessarily obscure the embodiments. Furthermore, the embodiments described herein are operable to be used together or in various combinations.

### 1. Overview

According to an embodiment, a new approach to advertising on the Internet provides for product placement in UGC, and is administered through a computerized marketing management system. This new approach allows users to place "approved" product-related information (PRI) in UGC in accordance with rules. PRIs includes information representing a brand or product that is provided or made available, for example, by a brand owner for inclusion in UGC. A product may be a good or service. A brand owner may be a company or other entity. Examples of PRIs include images of trademarks or products that may be included in video or web pages that are UGCs. A PRI may include a logo or a slogan for a company or product or product line. The PRI may include approved text that is approved by the brand owner or another entity. A PRI may be provided in forms other than images, such as audio (e.g., jingle), video, multimedia, etc. A UGC is content typically produced by the general public rather than by paid professionals. Examples of UGCs may be user web pages in a social media application such as FACEBOOK, amateur video posted on a website, such as YOUTUBE, blogs, customer reviews of products, etc. As described above, typically, the UGC is not produced by paid professionals. However, in other embodiments, the UGC may encompass content generated by paid professionals, the general public, and any other entities. The content includes any type of content for publication and is not limited to the types of content described above.

As indicated above, users place PRIs in UGCs in accordance with rules, which may be provided by the brand owner of the PRIs. These rules may describe how and where each PRI should be provided in the UGC and on the Internet. For example, rules for a hardware store PRI may require the PRI to be included in a UGC related to hardware or homeware, and that the PRI cannot be located with illicit content, and that the PRI must be clearly displayed. These are some examples of rules, and other rules may be specified.

Users posting UGCs including PRIs may be paid based on popularity of their UGCs, compliance with rules for the PRIs, and other metrics. Also, different payments models may be implemented for determining payment amounts. Payment may be provided directly from the brand owner. Also, the brand owner may place a cap on total amount paid to all users for a UGC marketing campaign. This cap may be apportioned to the users based on the criteria described above.

Many advantages are achieved through this system. Brand owners are able to infiltrate user generated content with the brand names as a form of advertising, and are able to control placement of their PRIs through rules that can be easily viewed and downloaded by users through a web interface. Also, brand owners can connect directly with their target audience, instead of going through a middle-man service, such as GOOGLE ADSENSE. Also, users generating UGCs increase their capacity to earn revenue from their posted content as an incentive to include the PRIs from brand owners.

### 2. System

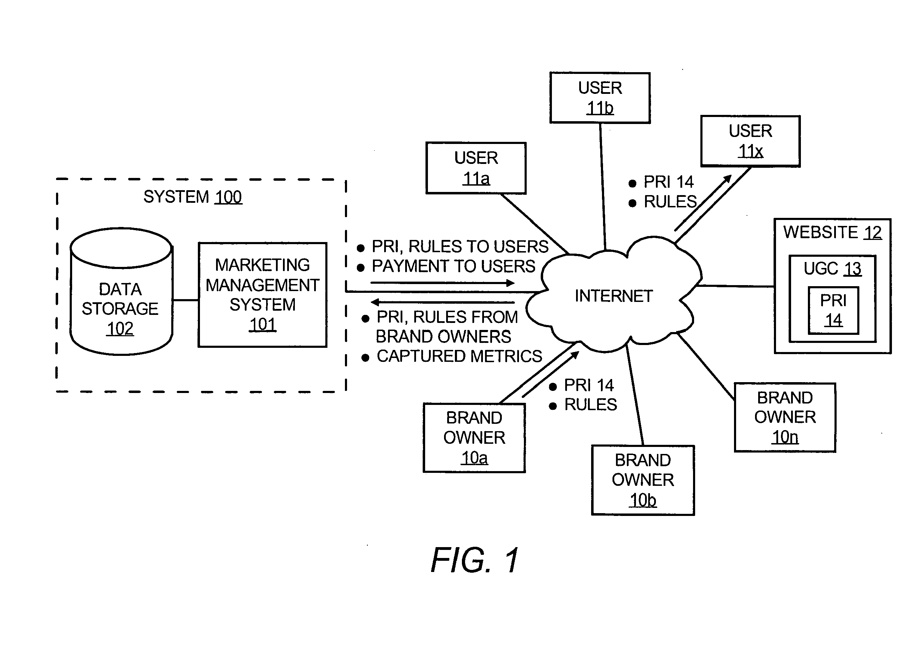

Figure 1 illustrates an environment in which a computerized system 100 includes a marketing management system 101 configured to facilitate marketing campaigns in the Internet space through product placement in a UGC. Brand owners 10a-n register with the marketing management system 101, and submit PRIs and rules for the PRIs to the marketing management system 101 via the Internet. The system 100 also includes a data storage 102 storing the PRIs, associated rules, registration information, metrics, and other information. The data storage 102 may include data storage devices storing data for the marketing management system 101 in a database.

Users 11a-x may register with the marketing management system 101 and then view rules and download PRIs from the marketing management system 101 via the Internet. Registration may include users providing user information to the marketing management system 101 and assigning unique IDs and storing passwords for the users, which may later be used to login into the system 101 and view rules and download PRI. Then, the users 11a-x may create UGCs and include the PRIs in the UGCs. The UGCs are published on the Internet. For example, the user 11x downloads PRI 14 and rules for PRI 14 from the marketing management system 101. This PRI 14 and its rules may have previously been provided to the marketing management system 101 by the brand owner 10a, and then stored in the data storage 102. The user generates UGC 13, such as the user's web page on a social media website 12. The UGC 13 includes the PRI 14 downloaded from the system 101. The PRI 14 may include an image of a product or logo.

The marketing management system 101 captures metrics that identify whether the PRI 14 in the UGC 13 is presented in a manner that complies with rules for the PRI 14. For example, the rules for PRI 14 may specify that the PRI 14 must be provided in a certain size and/or location on a web page. The rules may specify that the PRI 14 cannot be provided with PRIs from competitors and cannot be provided with illicit content, such as pornography. The captured metrics may identify the size and location of the PRI 14 in the UGC 13 and may search UGC 13 for keywords related to competitors' products or illicit material. The metrics may also include information related to the popularity of the UGC 13, such as number of hits on the user's web page, popularity metrics which may be available from the social media web site, etc. A payment amount for the user 11x is determined by the marketing management system 101 based on the popularity of the UGC 13, compliance with the rules for the PRI 14, and possibly other criteria, which may be set forth by the brand owner 10a. Payment may be provided to the user 11x via the Internet through a payment service. Payment and other services provided by the marketing management system 101 are described in further detail below. It should be noted that the marketing management system 101 may be provided in other environments, and is not limited to only providing services over the Internet.

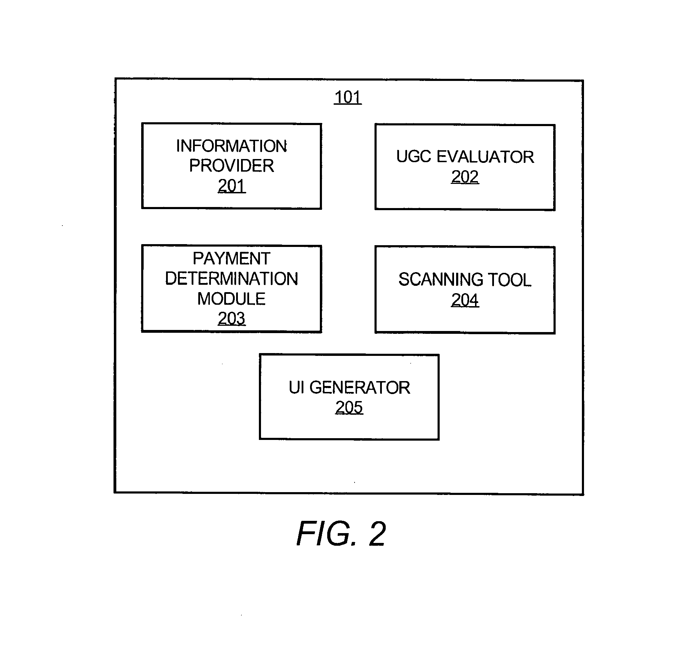

Figure 2 illustrates a block diagram of the marketing system 101, according to an embodiment. The marketing system 101 includes an information provider 201, a UGC evaluator 202, a payment determination module 203, a scanning tool 204, and a user interface (UI) generator 205. The information provider 201 provides rules and PRIs to be included in UGCs. The information provider 201 may be accessed via a web interface to view one or more of the PRIs stored in the data storage 102 shown in figure 1, and to select and download a PRI and its rules. The information provider 201 sends user-selected PRIs and rules to the end user devices of the users 11a-x. The information provider 201 may also provide information on the revenue model used for calculating how much the user of the UGC will get paid. Examples of revenue models are a page view model and a click-through model, but other models and criteria may be used to determined payment amount.

In one embodiment, each PRI includes a trackable tag that allows metrics to be captured for each PRI included in UGC published on the Internet. The data storage 102 shown in figure 1 stores the tracking tag for each PRI, and the scanning tool 204 searches the Internet using the tracking tags. The tracking tag is identified to capture the metrics for the PRI. The scanning tool 204 captures metrics, such as social media page rating, page views, location of product-related information within web page, size of product-related information, compliance with rules, and click-throughs. Scanning the Internet using tags is further described in U.S. patent application serial number 12/396,645 by Kirkby et al., which is entitled "Online Ad Detection and Ad Campaign Analysis", assigned to the assignee of the present invention, and which is incorporated by reference in its entirety.

The PRI may also include a link to a brand "landing page" that provides a user with information about the product. For example, a PRI includes a clickable image of the brand logo. If a user clicks on the image, the user is taken to the URL of the brand landing page. The click-throughs, including clicks on the PRI, may be used to determine payment amount.

The UGC evaluator 202 compares multiple UGCs, each including the same PRI. For example, if multiple UGCs are published on the Internet and each includes the PRI 14, each of those UGCs are compared against each other. Based on the comparison, each UGC is ranked and rankings may be used to determine payment amounts for each user. Rankings are determined from the captured metrics for each UGC and compliance with the rules for the PRI. Thus, each user competes to have their UGC ranked higher when compared to other UGC including the same PRI, and a higher ranking may dictate a higher payment amount for including the PRI in the UGC.

Rankings are based on the metrics captured for UGCs published on the Internet. The metrics and rankings are used with a revenue model to determine payment amounts. A revenue model may specify the metrics to be used for determining rankings and determines how revenue is apportioned among the UGCs based on the ranking. For example, metrics for determining the rankings for a page view payment model may include rating (e.g., the number of stars or other rating of the UGC provided by the website), coverage (e.g., number of views of UGC), position (e.g., location of the PRI in the UGC), object size (e.g., size of the PRI), and rules compliance. In another example, metrics for determining the rankings for a click-through payment model may include the same or similar metrics as the page view model and additionally include the metric of number of measured click-throughs. The click-throughs include clicks on the PRI or on the UGC that may take the user to a URL for the landing page for the PRI. Popularity is another metric and may be based on one or more of the number of views, number of click-throughs, and the ratings. The ratings may be based on user ratings of the UGC.

Based on these metrics, a ranking is provided to each UGC including a particular PRI. The ranking may include using different weights for various metrics to determine a rank for each UGC. Other techniques for ranking may be used. The scanning tool 204 periodically captures the metrics for published UGCs including PRIs, and the UGC evaluator 202 periodically evaluates and ranks the UGCs.

The payment determination module 203 uses the rankings and a revenue model to determine the amount of payment for each UGC. In one example, a cap is provided by the brand owner that specifies the total amount of payment that may be apportioned among the highest ranked UGCs. Then, the cap is divided based on the revenue model, whereby the higher ranked UGCs are given a larger portion of the cap. A time period may also be specified, and final rankings and final payment amounts are determined at the end of the time period. Thus, rankings may vary during the time period, but final rankings are determined at the end of the time period.

The UI generator 205 generates a graphical user interface (GUI) operable to display PRIs, associated rules, rankings, and other information. A user may access the GUI to view and download a PRI and its rules. Also, users and brand owners may view rankings and other information through the GUI. Also, the GUI can be used to register users and brand owners.

### 3. Examples of Displays Provided through the GUI

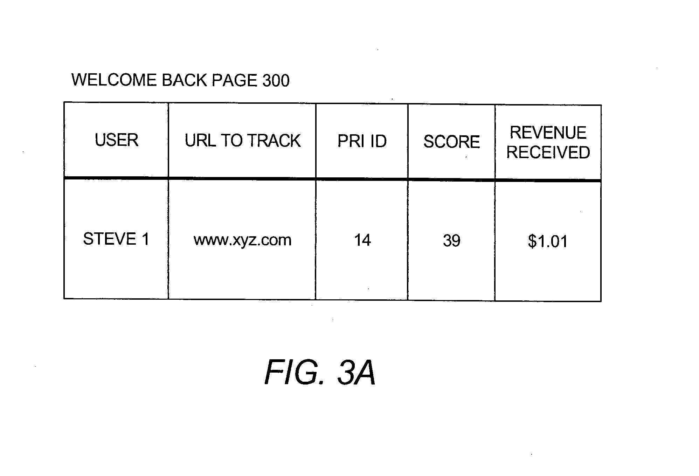

Figures 3A-D illustrate examples of displays generated by the UI generator 205. Figure 3A shows a "Welcome Back Page" 300 that may be presented to the user Steve 1 when the user logs into the system 101. The page 300 indicates a user ID, such as Steve 1, for the user, and URLs for any published UGCs. As shown in figure 3A, Steve 1 has a UGC published at the URL, www.xyz.com. A PRI ID is also identified that indicates the PRI included in the UGC. A score is shown that indicates a rank or the score is used to determine the rank of the UGC. Also, if any payment has been made, the payment amount is shown, which in this example is $1.01.

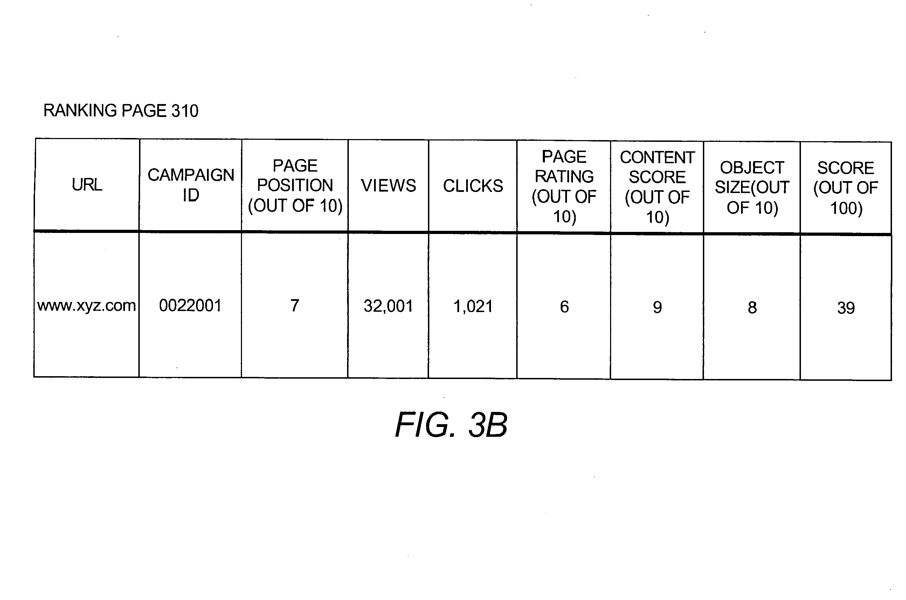

Figure 3B shows a "Ranking Page" 310 indicating metrics and the score for the UGC of figure 3A. A campaign ID may be assigned to a campaign of a brand owner and is included on the page. Metrics and values for metrics are also shown. Note that some of the values are measurements, such as the number of page views or number of click-throughs. Other values are assigned or computed. For example, the position of the PRI is given a score of 7 out of 10. This may be determined by an analyst viewing the PRI and its location in the UGC, and then assigning the score based on predetermined criteria. A similar analysis may be performed to determine the scores for page rating, content score, and object size, although page rating may be determined based on user evaluations of the UGC posted on the web site. Then, a final score or rank, shown as 39 out of 100, is computed from the metric values. Different weights may be assigned to different metrics to determine the final score.

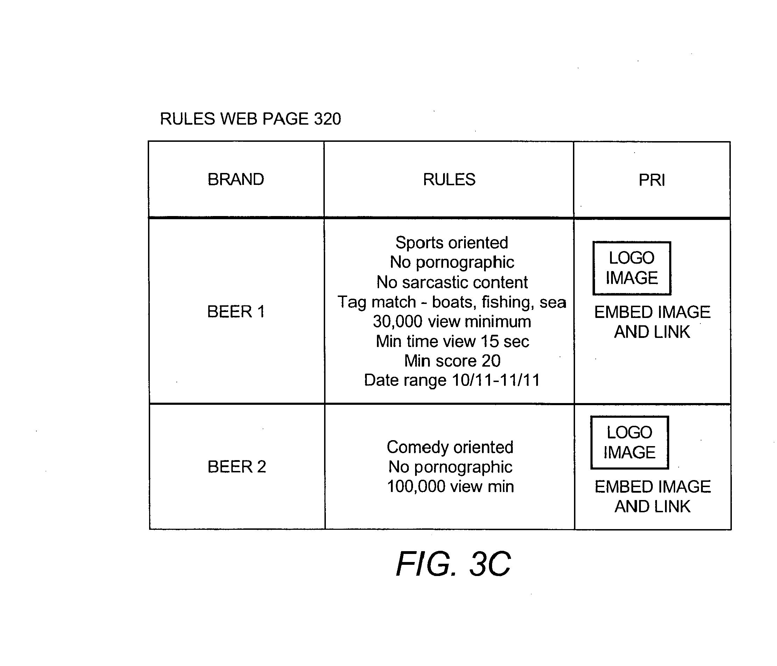

Figure 3C shows a "Rules Web Page" 320 that indicates PRIs available for use and their rules. For example, the user Steve 1 may access this page to view and download rules and PRIs to include in UGC. The brand names are listed, such as Beer 1 and Beer 2. Rules are listed for each brand. For example, for Beer 1, the rules specify the UGC must be related to sports and contain no pornographic or sarcastic content. The PRI should be placed on an image in the UGC related to boats, fishing or the sea. The UGC should be video, and the PRI should be displayed for at least 15 seconds in the video. Also, a minimum final score to obtain payment is 20, and the date range for determining the final score is provided. In addition to the rules, the PRI is shown. For example, the PRI for Beer 1 may be an image of a logo. Also instructions for the PRI include embedding the logo image and a link in the UGC. The link may be a link to a landing page. Also, a tracking tag is included in the logo image to allow the scanning tool 204 to capture metrics for the logo image when placed in UGC comprised of video.

The page 320 also shows rules and a PRI for the Beer 2 brand. The rules indicate that the UGC must be comedy oriented and not pornographic. Also, a minimum of 100,000 views is needed to receive payment. The PRI for Beer 2 is also shown as a logo image. The PRIs may include information other than logo images, such as images of products, a video or a product, a slogan, or other product-related information.

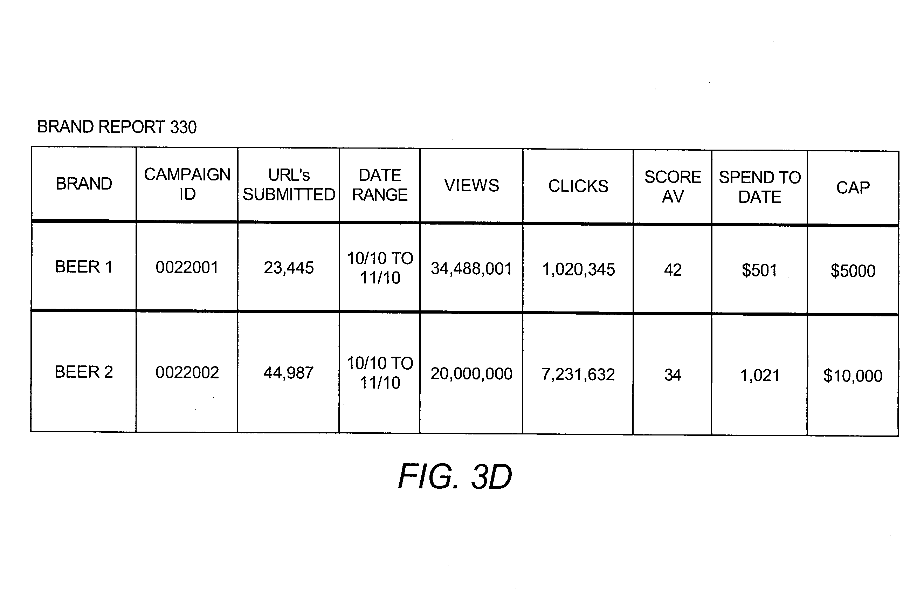

Figure 3D shows a "Brand Report" page 330. The page 330 may be viewed by a brand owner to get statistics on an ad campaign. For example, the page 330 may show the brand name, such as Beer 1 or Beer 2, campaign ID, number of URLs or UGCs submitted to include the PRI for the brand, the date range, the number of page views for all the UGCs, the number of click-throughs for all the UGCs, the score average, the payment amount awarded to date, and the cap. Other statistics may also be shown, and other reports may be provided via different displays.

### 4. Methods

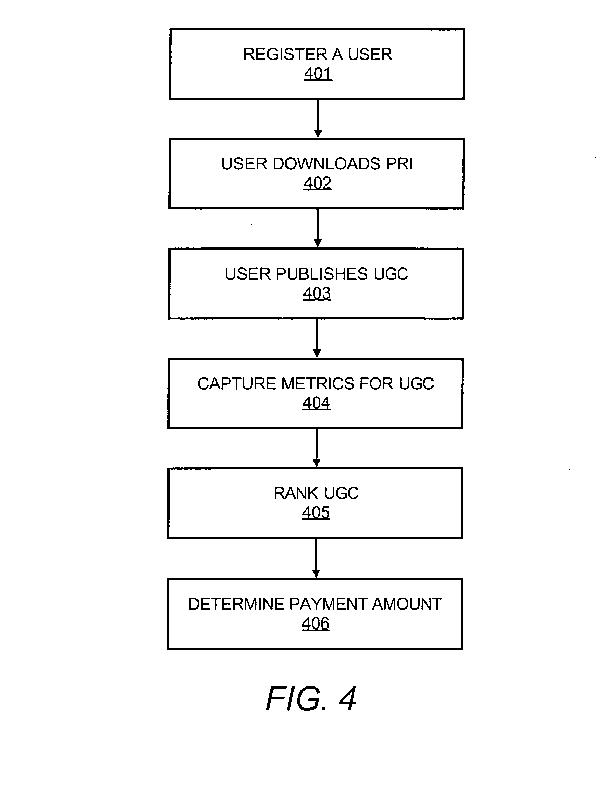

Figure 4 illustrates a method 400, according to an embodiment. The method 400 and other method described below are described with respect to the systems shown in figures 1 and 2 by way of example and not limitation. The methods may be practiced in other systems.

At step 401, a user registers with the marketing management system 101. The registration may include assigning a unique ID and password to the user.

At step 402, the user downloads a PRI and the rules for the PRI from the system 101. For example, the user may log into the system 101 and view PRIs and their associated rules through a user interface provided via the Internet. The user may select and download a particular PRI and its rules.

At step 403, the user publishes UGC including the PRI. Publishing the UGC may include posting the UGC on a web site on the Internet so the UGC may be viewed or otherwise played by others accessing the web site. For example, the UGC may be video posted on YOUTUBE or another web site. The UGC may be an image on a social media page. Other examples of UGCs are described above. The UGC includes the PRI that was downloaded at step 402.

At step 404, the system 101 captures metrics for the published UGC. For example, the PRI in the published UGC includes a trackable tag that enables the scanning tool 204 to gather metrics on the UGC. Some metrics may be gathered manually by an administrator accessing the UGC to determine the metrics. The captured metrics are stored in the data storage 102.

At step 405, the UGC is ranked based on comparison to other UGCs including the same product-related information. The ranking may be based on one or more of the captured metrics and compliance with the rules for the UGC. In one embodiment, the ranking may include determining a score for each UGC based on the metrics for each UGC.

At step 406, a payment amount is determined based on the captured metrics and the rankings and the rules. For example, a cap is apportioned to highest ranked UGCs. The payment amounts and rankings are updated as new values for the metrics are captured. A time period may be set for final rankings. However, payments may be made on a rolling basis during the time period if threshold metrics are met, such as satisfying a minimum number of page views or click-throughs.

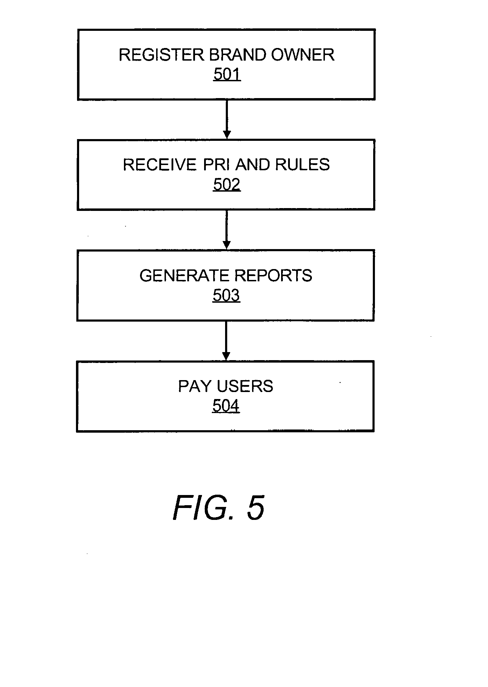

Figure 5 illustrates a method for making PRIs and rules available for viewing and downloading, according to an embodiment. At step 501, a brand owner registers with the system 101. This may include providing ad campaign information to the system 101 and determining a unique ID and password for the brand owner, as well as campaign IDs.

At step 502, a PRI and rules for the PRI are received and stored by the system 101 in the data storage 102. For example, the brand owner 10a shown in figure 1 logs into the system 101 and uploads the PRI 14 and rules for the PRI. The system 101 stores the PRI 14 and the rules in the data storage 102, along with a campaign ID and a brand name.

At step 503, reports are generated, including a report for the ad campaign of a brand owner, and the report may include metrics for UGCs. Figure 3D shows one example of a summary report that may be generated for a brand owner. The report may be viewed via the Internet through a user interface.

At step 504, the brand owner pays users for including the PRI 14 in the UGCs. Payment amounts may be determined based on rankings as described above. Payment may be made through a third-party service or the system 101.

### 5. Computer Readable Medium

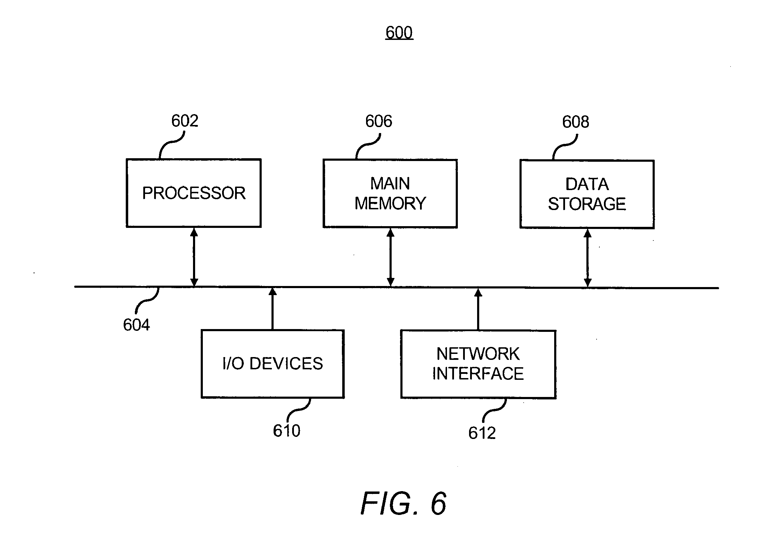

Figure 6 shows a computer system 600 that may be used with the embodiments described herein. The computer system 600 represents a generic platform that includes components that may be in a server or other computer system. The computer system 600 may be used as a platform for executing one or more of the methods, functions and other steps described herein. These steps may be embodied as software stored on one or more computer readable storage devices. Furthermore, the components of the system 101 shown in figure 2 may be software, hardware or a combination of hardware and software.

The computer system 600 includes a processor 602 that may implement or execute software instructions performing some or all of the methods, functions, and other steps described herein. Commands and data from the processor 602 are communicated over a communication bus 604. The computer system 600 also includes a main memory 606, such as a random access memory (RAM), where the software and data for processor 602 may reside during runtime, and a secondary data storage 608, which may be non-volatile and stores software and data. The memory and data storage are examples of computer readable mediums.

The computer system 600 may include one or more I/O devices 610, such as a keyboard, a mouse, a display, etc. The computer system 600 may include a network interface 612 for connecting to a network. It will be apparent to one of ordinary skill in the art that other known electronic components may be added or substituted in the computer system 600.

One or more of the steps of the methods described herein and other steps described herein and one or more of the components of the systems described herein may be implemented as computer code stored on a computer readable medium, such as the memory and/or secondary storage, and executed on a computer system, for example, by a processor, application-specific integrated circuit (ASIC), or other controller. The code may exist as software program(s) comprised of program instructions in source code, object code, executable code or other formats. Examples of computer readable medium include conventional computer system RAM (random access memory), ROM (read only memory), EPROM (erasable, programmable ROM), EEPROM (electrically erasable, programmable ROM), hard drives, and flash memory.

While the embodiments have been described with reference to examples, those skilled in the art will be able to make various modifications to the described embodiments without departing from the scope of the claimed embodiments. Furthermore, the embodiments described herein are not limited to including PRI in UGC. The embodiments are applicable for including any type of digital information in digital content, such as web sites, video, images, digital audio, emails, SMS texts, and other forms of digital content that may be communicated to a single device or multiple devices.

## Claims

1. A system configured to manage the placement of information in user-generated content, the system comprising:
data storage configured to store a plurality of product-related information for products and brands and storing rules for including each of the plurality of product-related information in user-generated content;
an information provider configured to provide the plurality of product-related information and the rules to devices;
a UGC evaluator configured to determine whether a plurality of published user-generated content including product-related information from the stored plurality of product-related information complies with the rules for the product-related information in each of the published user-generated content, and is also configured to compare the plurality of published user-generated content amongst each other using metrics captured for the plurality of published user-generated content; and
a payment determination module configured to determine an amount of payment for each of the plurality of published user-generated content based on the compliance with the rules and the comparison of the plurality of published user-generated content amongst each other.

2. The system of claim 1, wherein the UGC evaluator is configured to rank the plurality of published user-generated content amongst each other based on popularity and other criteria, wherein the popularity and the other criteria are determined based on the metrics.

3. The system of claim 1 or 2, wherein the plurality of published user-generated content are published on the Internet, and the system further comprises:
a scanning tool configured to scan the Internet for the product-related information in the plurality of published user-generated content and capture at least some of the metrics from the scan.

4. The system of any one of claims 1 to 3, wherein the information provider is configured to generate a graphical user interface that displays the plurality of product-related information and the rules to users, and allows the users to select any of the displayed plurality of product-related information for downloading to the devices, wherein the downloaded product-related information is operable to be included in user-generated content.

5. The system of any one of claims 1 to 4, wherein the metrics captured for the plurality of published user-generated are periodically captured,
the payment determination module updates the amount of payment for each of the plurality of published user-generated content in response to the metrics varying over time, and
wherein the information provider is preferably configured to generate a display in the graphical user interface that displays the updated amounts of payment varying over time.

6. The system of any one of claims 1 to 5, wherein the product-related information comprises at least one of a trademark, an image of a product, and approved text.

7. The system of any one of claims 1 to 6, wherein one or more of the plurality of published user-generated content comprises at least one of a digital picture of product-related information, video including the product-related information, and digital audio including the product-related information.

8. A method performed by a computer system executing code stored on a computer readable storage device, the method comprising:
providing a plurality of product-related information and rules for including each of the plurality of product-related information in user-generated content;
capturing metrics for a plurality of published user-generated content and each of the published user-generated content includes a product-related information of the plurality of product-related information, wherein the captured metrics include information related to compliance with the rules for the product-related information;
for each of the published user-generated content, determining whether the published user-generated content complies with the rules;
comparing the plurality of published user-generated content amongst each other using at least one of the captured metrics; and
a computer system determining an amount of payment for each of the published user-generated content based on the compliance with the rules and the comparison of the plurality of published user-generated content amongst each other.

9. The method of claim 8, wherein providing a plurality of product-related information further comprises:
providing a user interface that allows users to view the plurality of product-related information and the rules for each of the plurality of product-related information;
receiving a user selection of the product-related information; and
in response to the user selection, transmitting the product-related information to the user.

10. The method of claim 8 or 9, wherein the product-related information comprises at least one of a trademark, an image of a product, and audio related to the product.

11. The method of any one of claims 8 to 10,
wherein the captured metrics comprise at least one of size of the product-related information, location of the product-related information, and information related to popularity of the product-related information, and
wherein capturing metrics preferably comprises using a scanning tool to scan the Internet to determine the metrics.

12. The method of any one of claims 8 to 11, wherein comparing the plurality of published user-generated content amongst each other further comprises ranking the plurality of published user-generated content amongst each other based on popularity of each of the user-generated content, and preferably comprises:
generating a graphical user interface that displays the rankings; and
updating the graphical user interface to reflect periodic changes in the rankings.

13. The method of any one of claims 8 to 12, wherein the plurality of published user-generated content is published on the Internet.

14. The method of any one of claims 8 to 13, wherein one or more of the plurality of published user-generated content comprises at least one of a digital picture of product-related information, video including the product-related information, and digital audio including the product-related information.

15. A computer program product comprising computer-readable instructions, which, when loaded and executed on a computer system, cause the computer system to perform the following operations:
store a plurality of product-related information for products and brands and storing rules including each of the plurality of product-related information in user-generated content;
determine whether a plurality of published user-generated content including product-related information from the stored plurality of product-related information complies with the rules for the product-related information in each of the published user-generated content, and compare the plurality of published user-generated content amongst each other using metrics captured for the plurality of published user-generated content; and
determine an amount of payment for each of the plurality of published user-generated content based on the compliance with the rules and the comparison of the plurality of published user-generated content amongst each other.
